# EUROPÄISCHE PATENTSCHRIFT

(11) **EP 1 160 305 B1**
(45) Veröffentlichungstag und Bekanntmachung des Hinweises auf die Patenterteilung: **29.09.2004**
(21) Anmeldenummer: 01113376.6
(22) Anmeldetag: 01.06.2001
(51) Int. Cl.: C09K 21/04, C09K 21/12, B27K 3/52, D06M 13/432

(54) **Verfahren zur Herstellung eines Feuerschutzmittels für brennbare Materialien**
Process for the production of a fireproofing agent for combustible materials
Procédé de production d'un agent ignifuge pour des matériaux combustibles

(30) Priorität: 03.06.2000 DE 10027717
(43) Veröffentlichungstag der Anmeldung: 05.12.2001
(73) Patentinhaber: Semmelroth-Consulting GmbH, 40699 Erkrath (DE); Neochim AG, 191187 Sankt-Petersburg (RU)
(72) Erfinder: Ginzburg, Leonid Isaakovitch, D-40477 Düsseldorf (DE); Tsintskiladse, Rusudan Mikhajlovna, 191123 Sankt-Petersburg (RU); Gorodovykh, Vitalij Dmitrievitch, 191187 Sankt-Petersburg (RU); Tarkova, Evgenia Mikhailovna, D-50354 Hürth (DE); BALAEV, Arsen Gurgenovitch, 194017 Sankt-Petersburg (RU); Semmelroth, Dragutin, 40699 Erkrath (DE)
(74) Vertreter: Mentzel, Norbert, Dipl.-Phys.

(56) Entgegenhaltungen:
- WO-A-95/20636
- WO-A-96/00763
- US-A- 5 076 969

## Beschreibung

Die Erfindung richtet sich auf ein Verfahren der im Oberbegriff des Anspruches 1 angegebenen Art. Feuerschutzmittel dienen dazu an sich brennbare Materialien, wie zellulosehaltige Materialien, durch Imprägnierungen oder Beschichtungen möglichst weitgehend unbrennbar zu machen.

Bei einem bekannten Verfahren der im Oberbegriff des Anspruches 1 angegebenen Art (RU 2 055 857 Cl) werden Tenside im Stadium der Trockenmischung hinzugefügt. Als Tenside werden Gemische aus Alkyldimethylbenzylammoniumchlorid mit C₁₀₋₁₈-Alkylen, ferner Ammoniumhalogenid, z.B. Ammoniumchlorid, verwendet. Das Produkt wird als 20-40%-ige wäßrige Lösung zum Schutz von zellulosehaltigen Materialien eingesetzt. Die Feuerschutzeigenschaften des mit diesem bekannten Verfahren erreichten Endprodukts sind ungenügend.

Für die Feuerschutzbearbeitung von Stoffen und Textilfasern, insbesondere aus Leinen und Baumwolle, ist der Einsatz von Feuerschutzmitteln weit verbreitet, die aus einem Gemisch von Phosphorsäure und Harnstoff bestehen. Außerdem ist die Verwendung einer wäßrigen Lösung aus Harnstoff und Diammoniumphosphat (DAPH) (SU 472994 A) oder einem Gemisch aus Monoammoniumphosphat (MAPH) oder DAPH und verschiedenen Zusätzen (WO 8908137 WO 9013699 bekannt.
Diese Mittel enthalten als Zusatz Borsäure, Sulfat oder Ammoniumsulfamat oder Ammoniumhalogenid-Salze, vorzugsweise Ammoniumchlorid. Das Verfahren zur Herstellung besagter Feuerschutzmittel besteht in der trockenen Vermengung der Komponenten bei Zimmertemperatur mit anschließender Auflösung des erhaltenen Gemisches in Wasser ohne Erwärmung. Die Konzentration der erhaltenen Arbeitslösungen liegt in den Grenzen von 5-40% bezogen auf die feste Masse. Charakteristisch für das besagtes Verfahren ist, daß es notwendig ist, eine große Menge an Balaststoff, nämlich Wasser, einzusetzen, was bekanntlich den Transport des Produktes erschwert. Außerdem verfügen diese Mittel über unzureichende Feuerschutzeigenschaften. Das besagtes Mittel (WO 8908137) ist nach einer Reihe von Rezepturen für die Bearbeitung von Stoffen wegen des Ausbleichens der letzteren ungeeignet.

Bekannt ist ein weiteres Verfahren für die Herstellung eines Feuerschutzmittels zur Veredelung von Textilmaterialien aus Zellulose (JP 49- 48600 A), dessen Prozeß in zwei Schritten vor sich geht. Im ersten Stadium erhält man ein Produkt aus der Wechselwirkung von Phosphorsäure und Harnstoff im Verhältnis 1:4, nachdem man dieses Gemisch und Wasser (fast 12% der Säure- und Harnstoffmischung) bei einer Temperatur von 130°C binnen 20 Min. erwärmt hat. Im zweiten Stadium wird das erhaltene Produkt mit zusätzlichem Harnstoff und Wasser gemischt.
Das erhaltene Feuerschutzmittel verfügt über eine unzureichende Feuerbeständigkeit, und das Herstellungsverfahren ist ökologisch nicht ungefährlich wegen des Ausscheidens von Phosphorsäure in die Atmosphäre.

Bekannt ist des weiteren ein Verfahren für die Herstellung eines Feuerschutzmittels als festes Komposit (US 4992215 A), das darin besteht, daß in einer geringen Menge kochenden Wassers Phosphorsäure, MAPH und DAPH oder deren Gemisch aufgelöst wird. In diese heiße Lösung bringt man durch Vermischen Amin (Harnstoffe, Äthylendiamin, Diäthylentriamin, Melamin oder deren Mischung) und ein Tensid ein. Das Erhitzen und Vermischen der kochenden Mischung wird bis zum vollständigen Ausfallen des Produktes als festes Sediment fortgesetzt, das dann gefiltert, getrocknet und gemahlen wird. Das nach diesem Verfahren erhaltene Komposit ist für die Einbringung als Antipyrophor in Polymere (Polyäthylen, Polypropylen, Polystyrol und Nylon) bestimmt. Es ist jedoch wasserunlöslich und kann daher nicht als wäßrige Lösung für die Oberflächenbearbeitung oder zum Imprägnieren z.B. von Möbeln, Teppichen und Bodenbelägen angewendet werden.
Charakterisch für dieses Verfahren ist die Mehrstufigkeit des Prozesses, das Vorhandensein einer Mutterlauge sowie amino- und phosphathaltigen Abwässern, die verwertet bzw. gereinigt werden müssen, was zu beträchtlichen Mehraufwendungen führt. Außerdem ist, wie bereits erwähnt wurde, das mittels des Verfahrens erhaltene Antipyrophor ungeeignet zum Auftragen von Feuerschutzanstrichen auf die Oberfläche von Erzeugnissen (z.B. Holz oder holzähnlichen Erzeugnisse) oder zum Imprägnieren.

Bekannt ist weiterhin ein Verfahren für die Herstellung eines Feuerschutzmittels, welches für die Fertigung feuerbeständiger Holzfaserplatten (SU 517491 A) bestimmt ist. Dieses Feuerschutzmittel enthält Phosphorsäure und Harnstoff in einem Massenverhältnis von (0,8-1,2):(0,9-1,5). Das Verfahren zur Herstellung dieses Feuerschutzmittels umfasst zwei Schritte. Beim ersten Schritt werden flüssige 84%-ige Phosphorsäure und Harnstoff im Verhältnis von 0,6-0,9 Massenanteil Harnstoff bezogen auf 1 Massenanteil Phosphorsäure gemischt, das entspricht 55-70 Massen% an Harnstoff. Dieses Gemisch wird bis auf eine Temperatur von 135-140°C erwärmt, was ein wenig über dem Schmelzpunkt von Harnstoff (132°C) liegt. Die erhaltene Schmelze wird bei dieser Temperatur 3-10 Minuten belassen. Hierbei kommt es in der Schmelze des Harnstoffes zu einer teilweisen Neutralisierung der Phorphorsäure. Dann, im zweiten Schritt, wird das Produkt auf eine Temperatur von 60-100°C abgekühlt und der Rest an Harnstoff-0,3-0,6 Massenanteil bezogen auf 1 Massenanteil Phosphorsäure eingemischt (alle Mengenberechnungen für den Harnstoff gelten für 100%-Phosphorsäure). Das Endprodukt wird in kaltem Wasser aufgelöst, bis man die Arbeitskonzentration erhält.
Charakteristisch für dieses bekannte Verfahren ist die komplizierte Technologie, insbesondere das 2-Stufen-Verfahren, die Verwendung von hochkonzentrierter Phosphorsäure bei hohen Temperaturen, was notwendigerweise zu schädlichen Emissionen in den Produktionsraum und in die Atmosphäre führt und daher ökologisch als schädlich einzustufen ist. Außerdem verfügt das erhaltene Feuerschutzmittel über unzureichende Feuerschutzeigenschaften (der Massen-Verlust beläuft sich beim Testen einer Holzfaserplatte auf Feuerbeständigkeit in einer Feuerröhre auf 20%).

Des weiteren ist aus der Patentschrift GB 1171475 eine feuerhemmende Bearbeitung von Holz bekannt, wobei das Holz unter Druck mit einer wäßrigen Lösung von Diammoniumphosphat (DAPH) imprägniert wird. Bei der anschließenden Behandlung mit einer wäßrigen Lösung eines Magnesiumsalzes fällt als Sediment Magnesiumammoniumphosphat aus. Da kein Tensid verwendet wird, kann keine gleichmäßige Imprägnierung eines zellulosehaltigen Erzeugnisses erzielt werden. Die Anwendung bei Papier- und Textilerzeugnissen ist nicht vorgesehen.

In der Patentanmeldung WO 96/00763 wird ein Feuerschutzmittel zur Imprägnierung von Holz-, Papier- und Textilstoffen sowie ein Verfahren für die Bearbeitung dieser Materialien beschrieben. Die feuerhemmende Zusammensetzung enthält MAPH und/ oder DAPH, wasserlösliche Ammoniumsalze, wasserlösliche Salze (Chloride, Sulfate, Acetate) von solchen Metallen, die mit den Phosphaten unlösliche Salze bilden, Phosphorsäure und Essigsäure sowie nach Bedarf Funktionszusätze. Um eine vorzeitige Sedimentation in den konzentrierten Lösungen zu vermeiden, werden zuerst zwei separate Lösungen bereitgestellt. Diese Lösungen werden gemischt und auf einen pH-Wert von 3.5 bis 3.7 eingestellt. Anschließend wird das Holz mit der Mischung imprägniert. Zum Entfernen der enthaltenen Essigsäure wird das Holz 1 bis 3 Wochen bei 60°C getrocknet. Das fertige Holzerzeugnis enthält 15 bis 40 Gew.% des adsorbierten Stoffes. Papier- und Textilerzeugnisse werden beispielsweise mittels Eintauchen bearbeitet. Nach dem Auspressen und Trocknen enthalten sie 10 bis 15 Gew.% des adsorbierten Stoffes.
Die Feuerbeständigkeit dieser Stoffe ist hoch. Das Verfahren besitzt jedoch wesentliche Nachteile. Die Imprägnierlösung, welche einen hohen Anteil an Ballaststoffen (Wasser) enthält und damit hohe Transportkosten erzeugt, wird durch ein kompliziertes und umweltschädliches Verfahren erhalten. Einerseits ist der hohe Säuregehalt der Imprägnierlösung von Nachteil, da Säuredämpfe in die Atmosphäre gelangen können. Die sichere Entfernung dieser Dämpfe verursacht zusätzliche Kosten. Andererseits ist davon auszugehen, daß die Erzeugnisse beim Trocknen nicht vollständig neutralisiert werden, da sich Phosphorsäure auf diese Weise nur schwer entfernen läßt. Reste an Phosphorsäure in den Erzeugnissen können zu Schädigungen des Materials führen, z.B. zu Struktur- und Farbveränderungen von Papier- und Textilerzeugnissen oder zu Korrosionserscheinungen bei kontaktierenden Metallelementen.
Desweiteren bewirkt die lange Trocknungszeit hohe Energiekosten.
Über die Verwendung von Tensiden werden keine Angaben gemacht. Ohne eine oberflächenaktive Komponente wird jedoch keine gleichmäßige und tiefe Imprägnierung eines zellulosehaltigen Erzeugnisses erzielt.
Die Anwendung bei Papier- und Textilerzeugnissen ist des weiteren nicht vorteilhaft, da der hohe Salzgehalt die notwendige Weichheit der Erzeugnisse negativ beeeinflußt.

Der Erfindung liegt daher die Aufgabe zugrunde, ein zuverlässiges, preiswertes Verfahren der im Oberbegriff des Anspruches 1 angegebenen Art zu entwickeln, dessen erlangte Endprodukte sich durch hohe Feuerschutzeigenschaften auszeichnen. Dies wird erfindungsgemäß durch die im Anspruches 1 angegebenen Maßnahmen erreicht, denen folgende besondere Bedeutung zukommt.

Die Zugabe von Tensid in die Schmelze in den im Anspruch angegebenen Mengen führt zu einem neuen überraschenden Effekt, wenn man den Schmelzvorgang der mit den Tensiden versetzten Schmelze eine definierte Zeit fortführt. Als Kriterium für das erhaltene Endprodukt kann eine Probe in einer 20%-igen wäßrigen Lösung dienen. Diese Probe muß einen pH-Wert zwischen 5,0 bis 6,2 ergeben.
Wendet man eine wäßrigen Lösung an den zu schützenden brennbaren Materialien an, so ergibt sich eine überraschend gute Feuerbeständigkeit. Eine Behandlung von Holz mit dem erfindungsgemäßen Feuerschutzmittel ergab, wie anhand von Beispielen noch näher erläutert wird, einen Masseverlust von nur 7,0% bis 9,0% bei den verschiedenen Mischungen.

Bei der Erfindung wird eine Kombination aus MAPH und DAPH zum Beispiel in einem Verhältnis von 9:1 (Ammophos) verwendet. Als Tenside benutzt man vorzugsweise kationenaktive Tenside, z.B. eine Mischung aus Alkylbenzyldimethylammoniumchloriden mit C₁₀₋₂₀-Alkylen (I), eine Mischung aus Dialkylbenzylmethylammoniumchloriden mit C₁₇₋₂₀-Alkylen (II), eine Mischung aus Trialkylbenzylammoniumchloriden mit C₇₋₉-Alkylen (III), eine Mischung aus Alkyltrimethylammoniumchloriden (Bromiden) mit C₁₀₋₁₆-Alkylen (IV), eine Mischung aus Alkoxymethylmethyldiäthylammoniummethylsulfaten mit C₁₀₋₁₈-Alkylen (V), eine Mischung aus (Alkyldioxyäthylen)methylmethyldiäthylammoniumbenzolsulfonat mit C₁₆₋₁₈-Alkylen (VI), eine Mischung aus Alkylpyridiniumchloriden (Bromiden) mit C₁₆₋₁₈-Alkylen (VII), Dodezylpyridiniumbisulfat (VIII).

Als Tenside können auch Nichtionen-Tenside eingesetzt werden, z. B. Alkylphenole mit 6-22% oxyäthylierten Gliedern.
Die Menge an hinzuzufügendem Wasser bei der Befeuchtung der Trockenmischung vor deren Schmelzung beträgt vorzugsweise 1-5% von der Masse der Trockenkomponenten.

Das erfindungsgemäße Verfahren ist einfach, einphasig und ökologisch unbedenklich, da keine Abwasserverunreinigungen und Schadstoffemissionen erfolgen. Das erhaltene Produkt ist in der Anwendung sehr bequem, da es ein nichtstaubender Streustoff ist, der leicht in Wasser aufzulösen ist.

Ein optimales Feuerschutzmittel erhält man bei dem erfindungsgemäßen Verfahren aus einer Legierung von MAPH oder DAPH oder deren Mischung mit Harnstoff und Tensiden.

Diese Legierung hat einen Schmelzpunkt zwischen 102-106°C, der sich vom Schmelzpunkt sowohl der Ausgangskomponenten, als auch von deren Mischungen (Schmelzpunkt des Harnstoffes ∼ 132°C; Schmelzpunkt MAPH ∼ 190°C; DAPH zersetzt sich ohne Schmelztemperatur) unterscheidet.

Das erfindungsgemäße Mittel kann als wäßrige Lösung in jeder für die Anwendung geeigneten Konzentration angewendet werden, vorzugsweise als 20%-ige wäßrige Lösung. Das erfindungsgemäße Mittel verfügt über höhere Feuerschutzeigenschaften im Vergleich zu den bekannten Zusammensetzungen auf der Grundlage einer phosphathaltigen Komponente und Harnstoff, die mittels anderer Verfahren, z. B. Patent RU 2055857, hergestellt werden.

Außerdem geben die verwendeten Tenside der angezeigten Zusammensetzung zusätzliche positive Eigenschaften. Die Zusammensetzung besitzt eine ausgeprägte fungizide Aktivität und neben der Schwerbrennbarkeit der bearbeiteten Materialien werden die Holzkonstruktionen und Anstriche, aber auch Stoffe und Papier vor Schäden, verursacht durch mikroskopische Pilze, konserviert.
Das erfindungsgemäße Endprodukt ist ein nicht verklumpender Streustoff von weißer oder grau-weißer Farbe und gut wasserlöslich (bis zu 60%). Die Feuchtigkeit des Trockenpulvers beträgt nicht mehr als 2%.

Das erfindungsgemäße Herstellungsverfahren für ein Feuerschutzmittel wird wie folgt realisiert:
Ammoniumphosphat, für das man entweder Monoammoniumphospat (MAPH), Diammoniumphospat (DAPH) oder eine Mischung davon benutzt, werden trocken mit Harnstoff vermischt, vorzugsweise in einem Massenverhältnis Ammoniumphosphat zu Harnstoff von (1-2,3) : (1-3). Dann wird die Mischung mit Wasser durchfeuchtet, vorzugsweise in einer Menge von 1-5 Masse% Wasser bezogen auf die Masse der Trockenmischung und geschmolzen. Zwecks Vereinfachung des Betriebsverfahrens ist es zweckdienlich, den Schmelzprozeß bei einer Temperatur von nicht über 120 ° C bis zum Erhalt einer flüssigen geschmolzenen Masse durchzuführen. Die erhaltene Schmelze fügt man die entsprechenden Tenside bei, vorzugsweise in einer Menge von 0,5-5,0 Masse% Tensid bezogen auf die Masse Trockenmischung, und setzt den Schmelzvorgang bis zum Erhalt des Produktes fort, d.h. bis der pH-Wert einer 20%-igen wäßrigen Lösung 5,0 bis 6,2 beträgt. Der Schmelzpunkt des Endproduktes liegt bei 102 bis 106°C.

Das mit dem erfindungsgemäßen Verfahren erhaltene Produkt oder die wäßrige Lösung dieses Produktes wird als Feuerschutzmittel eingesetzt, vorzugsweise für die Oberflächenbearbeitung und/oder zur Imprägnierung von zellulosehaltigen Materialien, Stoffen und nichtgewebten Textilien aus natürlichen und/oder synthetischen Fasern oder Mischungen davon. Das Endprodukt kann bekannte zweckbestimmte Zusätze enthalten, z.B. Ammoniumhalogenid (Ammoniumchlorid), Sulfat oder Ammoniumsulfamat, Polyphospat (Natrium- oder Kaliumpolyphosphat), Karbonat (Natrium-, Kalium- oder Ammoniumkarbonat), die im Stadium der Trockenmischung beigemengt werden.
Das erfindungsgemäße Feuerschutzmittel kann als wäßrige Lösung leicht am Arbeitsplatz durch Auflösung des Trockenmittels in Wasser bei Zimmertemperatur zubereitet werden. Die Arbeitslösung wird auf die zu schützende Oberfläche mit einem Pinsel oder durch einen Zerstäuber aufgetragen, bis diese vollgesogen ist. Die Verarbeitung kann in mehren Schritten mit Unterbrechungen zum Trocknen je nach Art des Materials durchgeführt werden.

Nachfolgend werden in einigen Beispielen Feuerschutzmittel beschrieben, die mit dem erfindungsgemäßen Verfahren hergestellt und in der nachfolgenden Tabelle als Beispiele Nr. 1 bis Nr. 9 angegeben sind. Unter Nr. 10 bis 14 sind Vergleichsbeispiele genannt, die nicht nach dem erfindungsgemäßen Verfahren durchgeführt worden sind. In diesen letztgenannten Fällen sind die Tenside in der angegebenen Menge nicht in die Schmelze, sondern in die Trockenmischung, eingegeben worden. Dies führt zu wesentlich schlechteren Ergebnissen, wie aus der vorletzten Spalte der Tabelle zu ersehen ist.

### Beispiel 1:

In einem horizontalen Mischer, der über einen Heizmantel und Bandrührer verfügt, mit einem Fassungsvermögen von 200 1 werden 50 kg MAPH, 50 kg Harnstoff eingebracht, vermischt und mit 3 kg Wasser aufgefüllt. In dem Mantel wird Dampf mit einem Druck von 2 at (ca. 500 kPa) eingebracht, was eine Temperatur von 120°C im Mischer sicherstellt. Nachdem die Mischung einen flüssigen Zustand (Schmelze) erreicht hat, werden 0,5 kg Tensid (I) hinzugefügt. Der Schmelzvorgang wird fortgeführt, bis eine 20%-ige wäßrige Lösung des Produktes einen pH-Wert von 6,05 erreicht hat. In den Heizmantel wird Wasser mit einer Temperatur von 25°C zur Abkühlung gegeben. Unter Fortsetzung des Mischvorganges wird die Schmelze dispergiert. Es wird ein zweckbestimmtes Produkt in Form eines gräulich-weißen Pulvers erhalten, dessen Schmelzpunkt bei 104°C liegt.

Es wurden Versuche zu den Feuerschutzeigenschaften des angezeigten Mittels durchgeführt, wobei eine einsatzfähige 20%-ige wäßrige Lösung aus dem Feuerschutzmittel zubereitet wurde. Die Holzmuster für die Fesstellung der Feuerschutzeigenschaften mit den Maßen 150x60x30 wurden für 2 Stunden in diese Arbeitslösung gehalten und anschließend bei einer Temperatur von 70°C in einem Trockenschrank getrocknet, bis eine gleichbleibende Masse erreicht wurde.

Die Versuche auf Feuerfestigkeit/Brandsicherheit sind nach der Standardmethode GOST 16336-76 in einer Anlage für die Bestimmung der Brennbarkeit von Materialien (GOST 12.2.003-74) durchgeführt worden. Die Bewertung der Feuerschutzeffektivität wurde nach dem Verlust der Probe an Masse laut der Formel ΔM=(M1-M2) 100/M1 bestimmt (wo M1und M2 die Masse der Probe vor und nach dem Versuch sind).
Nach der Größe ΔM werden die Materialien als schwerbrennbar (ΔM<9%) und schwer entflammbar (9%<ΔM<25%) eingestuft. Die Ergebnisse der Versuche sind der Tabelle zu entnehmen.

### Beipiele 2-9:

Der Herstellungsablauf für das Feuerschutzmittel und dessen Test verlaufen analog dem in Beispiel 1 geschilderten. Die Varianten in der Zusammenstellung der Ausgangsmischung, die Verfahrensbedingungen und die Versuchsergebnisse der Feuerschutzeigenschaften sind in der unten aufgeführten Tabelle angegeben.

### Vergleichsbeispiel 10 (Stand der Technik):

In einem Porzellanglas werden im Trockenzustand 50 g MAPH und 50 g Harnstoff gemischt, 5 ml Wasser und 0,5 g Tensid (I) hinzugefügt. Die Mischung wird in einem Ölbad erwärmt, bis die Mischung geschmolzen ist, und bei 120°C für 30 Minuten intensiv gemischt. Dann wird das Glas in ein Wasserbad mit einer Temperatur von 25°C gebracht, und unter weiterem Mischen wird die Schmelze dispergiert, bis man das Endprodukt erhält. Der Schmelzpunkt des Endproduktes liegt bei 103 °C.
Aus dem Produkt wird eine wäßrige Imprägnierungslösung in einer 20%-igen Konzentration hergestellt. Es werden zu den Feuerschutzeigenschaften der erhaltenen Lösung Versuche laut Beispiel 1 durchgeführt. Die Versuchsergebnisse sind in der Tabelle aufgeführt.

### Vergleichsbeispiele 11-14 (Stand der Technik):

Das Verfahren erfolgt analog dem in Beispiel 10 beschriebenen, doch es wird die Art des Ammoniumsphosphats, der Tenside und das Verhältnis der Komponenten zueinander verändert. Die Versuche zu den Feuerschutzeigenschaften des Produktes werden analog dem Beispiel 1 durchgeführt. Die Versuchsergebnisse sind in der Tabelle aufgeführt.

Mit dem nach dem erfindungsgemäßen Verfahren erlangten Feuerschutzmitteln werden zellulosehaltige Materialien wie Holz oder Holzerzeugnismittel behandelt. Dieses Mittel ist für Textilien jeder Art aus natürlichen oder synthetischen Fasern ebenso geeignet, wie für Materialien aus Papier.

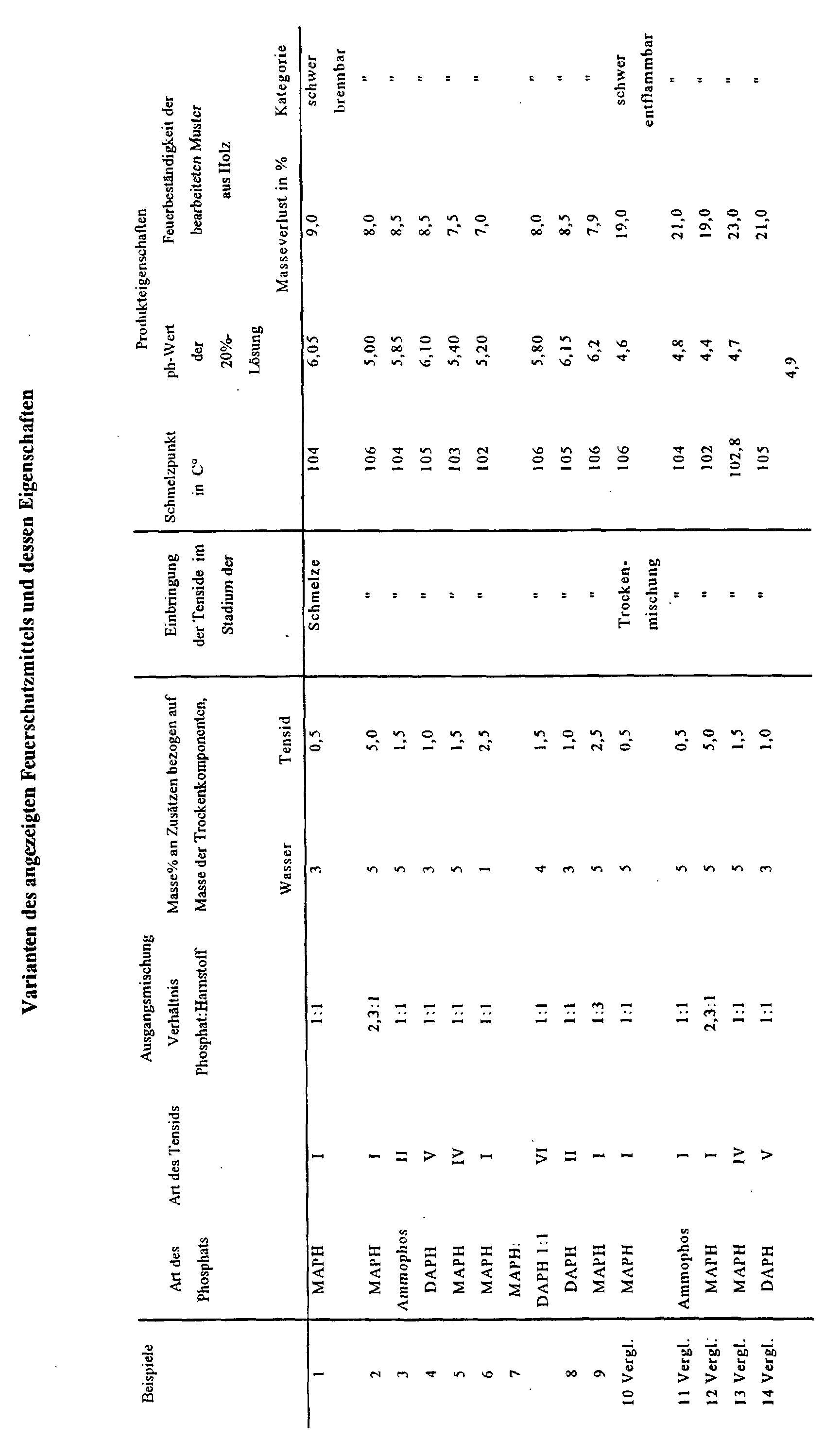

## Patentansprüche

1. Verfahren zur Herstellung eines Feuerschutzmittels für brennbare Materialien,
bei dem zunächst eine Trockenmischung aus Monoammoniumphospat oder Diammoniumphospat oder einer Mischung von beiden und aus Harnstoff hergestellt wird,
dann diese Trockenmischung durchfeuchtet und bis zu einer Schmelztemperatur von 120° C erhitzt wird,
nach dem Abkühlen aus der Schmelze ein Endprodukt erhalten wird, dessen Schmelzpunkt zwischen 102° C bis 106° C liegt,
und dieses Endprodukt zermahlen und insbesondere in wäßriger Lösung als Feuerschutzmittel eingesetzt wird,
wobei bei diesem Verfahren Tenside hinzugefügt werden,
**dadurch gekennzeichnet ,**
**dass** die Zugabe des Tensids im Stadium der Schmelze erfolgt und zwar in einer Menge von 0,5 bis 5 Massen% Tensid bezogen auf die Masse der Trockenmischung
und wobei der Schmelzvorgang dieser Gemisch-Kombination bei 120° C mindestens so lange weitergeführt wird, bis eine entnommene Probe in einer 20%-igen wäßrigen Lösung einen pH-Wert zwischen 5,0 bis 6,2 aufweist.

2. Verfahren nach Anspruch 1, **dadurch gekennzeichnet, dass** als Tensid ein kationenaktives Tensid verwendet wird.

3. Verfahren nach Anspruch 1, **dadurch gekennzeichnet, dass** als Tensid ein Nichtionen-Tensid verwendet wird.

## Claims

1. Method for the manufacture of a fire protection means for combustible materials,
with a dry mixture of monoammonium phosphate or diammonium phosphate or a mixture of both and of urea being prepared,
this dry mixture then being wetted and heated to a melt temperature of 120 °C,
an end product with melt point of between 102 °C and 106 °C being obtained after the melt has cooled down,
this end product then being ground and used as fire protection means, particularly in an aqueous solution,
with a surfactant being added in this method,
**characterised in that**
the surfactant is added at the melt stage with 0.5 to 5 % by mass of surfactant being added relative to the mass of the dry mixture
and the melting process of this mixture combination being continued at 120°C until a sample taken has a pH of 5.0 to 6.2 in a 20% aqueous solution.

2. Method in accordance with claim 1, **characterised in that** a cationic surfactant is used as the surfactant.

3. Method in accordance with claim 1, **characterised in that** a non-ionic surfactant is used as the surfactant.

## Revendications

1. Procédé de fabrication d'un agent ignifuge pour matériaux combustibles,
consistant dans un premier temps à confectionner un mélange sec de phosphate de monoammonium ou de phosphate de diammonium, ou un mélange des deux, et d'urée,
puis à humidifier à coeur ce mélange sec et à l'échauffer jusqu'à une température de fusion de 120°C,
à obtenir, après refroidissement consécutif à la fusion, un produit dont le point de fusion se situe entre 102 °C et 106°C,
et à moudre ce produit fini et à le mettre en oeuvre en particulier dans une solution aqueuse comme produit de protection contre le feu,
sachant que dans ce procédé sont ajoutés des tensides,
**caractérisé en ce que**
l'ajout du tenside a lieu au stade de la fusion, à raison de 0,5 à 5 % massiques de tenside par rapport à la masse du mélange sec,
et sachant que la séquence de fusion de cette combinaison de mélange est poursuivie à 120°C au moins jusqu'à ce qu'un échantillon prélevé présente, dans une solution aqueuse à 20 %, un pH compris entre 5,0 à 6,2.

2. Procédé selon la revendication 1, **caractérisé en ce que** le tenside utilisé est un tenside cationique.

3. Procédé selon la revendication 1, **caractérisé en ce que** le tenside utilisé est un tenside non ionique.
